# EUROPÄISCHE PATENTSCHRIFT

(11) **EP 3 607 374 B1**
(45) Veröffentlichungstag und Bekanntmachung des Hinweises auf die Patenterteilung: **16.12.2020**
(21) Anmeldenummer: 18716234.2
(22) Anmeldetag: 05.04.2018
(51) Int. Cl.: G02B 7/02, G02B 7/00, B23K 26/00

(54) **KARTESISCHE POSITIONIERVORRICHTUNG UND LASERBEARBEITUNGSKOPF MIT DERSELBEN**
CARTESIAN POSITIONING DEVICE AND LASER-MACHINING HEAD HAVING SAME
DISPOSITIF DE POSITIONNEMENT CARTÉSIEN ET TÊTE D'USINAGE AU LASER ÉQUIPÉE DE CELUI-CI

(30) Priorität: 05.04.2017 DE 102017107282
(43) Veröffentlichungstag der Anmeldung: 12.02.2020
(73) Patentinhaber: Precitec GmbH & Co. KG, 76571 Gaggenau (DE)
(72) Erfinder: SCHUBERT, Peter, 76571 Gaggenau (DE)
(74) Vertreter: Ter Meer Steinmeister & Partner
(86) Internationale Anmeldenummer: PCT/EP2018/058698
(87) Internationale Veröffentlichungsnummer: WO 2018/185208

(56) Entgegenhaltungen:
- DE-A1- 2 364 026
- US-A- 5 583 691
- US-A1- 2006 238 902
- US-B1- 6 467 762
- Anonymous: "Thorlabs Tools of the trade Vol. 18", , 1. Januar 2006 (2006-01-01), Seite 234, XP055485951, Gefunden im Internet: URL:this.should.be.a.book [gefunden am 2018-06-20]
- Anonymous: "New Focus Inc. Revised 1997/98 Catalog, Vol. 8.2" In: "New Focus Inc. Revised 1997/98 Catalog, Vol. 8.2", 1. Januar 1998 (1998-01-01), New Focus, Inc., XP055485952, Seiten 120-121, Seite 120 - Seite 121

## Beschreibung

Die Erfindung betrifft eine kartesische Positioniervorrichtung zum Positionieren einer Optik sowie einen Laserbearbeitungskopf zum Bearbeiten eines Werkstücks mittels eines Laserstrahls, der eine solche kartesische Positioniervorrichtung umfasst.

In vielen Optikanwendungen muss eine Optik, wie beispielsweise eine Linse oder Strahlformungsoptik, in zumindest zwei Richtungen unabhängig voneinander eingestellt werden. Insbesondere bei der Materialbearbeitung mittels eines Laserstrahls, wie beispielsweise Laserschneiden oder Laserschweißen, muss ein im Laserbearbeitungskopf angeordnetes optisches Bauelement zum Justieren des Laserstrahls durch eine feine Düsenbohrung eines Laserbearbeitungskopfs in zwei Richtungen senkrecht zur optischen Achse des Laserbearbeitungskopfs unabhängig voneinander eingestellt werden. Bei herkömmlichen Positioniervorrichtungen zum Positionieren einer Optik besteht hierbei das Problem, dass die Optik nicht exakt linear bzw. nicht auf senkrecht zueinander stehenden Achsen verschoben wird. Dadurch wird eine präzise Einstellung erschwert und eine Reproduzierbarkeit einer gewünschten Position beeinträchtigt.

Darüber hinaus besteht gerade bei Optikanwendungen im Bereich der Laserbearbeitung das Problem, dass beispielsweise in einem Laserbearbeitungskopf nur wenig Raum für die Positioniervorrichtung zum Positionieren der Optik zur Verfügung steht. Auch die Zugänglichkeit für Bedienpersonal ist räumlich stark eingeschränkt, so dass die herkömmlicherweise auf verschiedenen Seiten angeordneten Bedienelemente zum Positionieren der Optik entlang zweier kartesischer Achsen nur schwer zu erreichen sind.

Auch ist es im Stand der Technik nicht möglich, einer Einstellung eines Stellelements einen genauen Wert einer entsprechenden Bewegung der Optik entlang einer bestimmten Achse zuzuordnen.

Aus JP 2004-361862A ist ein Kondensorsystem für eine Laserbearbeitungsvorrichtung gezeigt, wobei eine Linse eine Bewegung in zweidimensionaler Richtung senkrecht zur optischen Achse ausführen kann. Hierfür sind zwei Sets aus Mikrometer und Feder orthogonal zueinander angeordnet.

US 6 467 762 B1 zeigt einen Positioniermechanismus für optische Komponenten. Eine Topplatte kann mithilfe eines x-Mikrometers und eines z-Mikrometers in x- bzw. z-Richtung verstellt werden. Die Bewegung des z-Mikrometers führt über Platten eine Verbindungselements zu einer Bewegung der Topplatte in z-Richtung. Beide Mikrometer sind an einer Seitenplatte des Gehäuses angebracht und entlang der x-Richtung verstellbar.

US 5 583 691 A zeigt eine Positioniervorrichtung für eine optische Faser mit einem Rahmen und einem Tisch zur Aufnahme einer optischen Komponente. Unterhalb des Tisches befindet sich eine innere Platte zur Aufnahme von Aktuatoren, die entlang einer y-Richtung verstellbar sind. Für eine Bewegung in einer x-Richtung ist ein Aktuator vorgesehen. Für eine Bewegung in y-Richtung und für eine Schwenkbewegung sind zwei weitere Aktuatoren vorgesehen, deren Verstellbewegungen geeignet überlagert werden müssen.

DE 23 64 026 A1 beschreibt eine Vorrichtung zum Befestigen eine Bildträgers in einer Soll-Position mit einem Halterahmen und einem darin angeordneten Bildträger, der mittels zweier Schrauben, die in Gewindelöcher an einer Seite des Rahmens eingeschraubt sind, in seiner Soll-Position gehalten wird. Eine Stellung des Bildträgers in einer ersten Richtung wird durch Drehen der beiden Schrauben eingestellt.

Der Erfindung liegt daher die Aufgabe zugrunde, eine kartesische Positioniervorrichtung zum Positionieren einer Optik sowie einen Laserbearbeitungskopf mit derselben bereitzustellen, wobei eine Positionierung der Optik in zwei Richtungen unabhängig voneinander bei kompakter und einfacher Bauweise und mit verbessertem Bedienkomfort ermöglicht wird.

Diese Aufgabe wird erfindungsgemäß durch eine kartesische Positioniervorrichtung zum Positionieren einer Optik gemäß Anspruch 1 und einem Laserbearbeitungskopf zum Bearbeiten eines Werkstücks mittels eines Laserstrahls mit derselben gemäß Anspruch 13 gelöst. Vorteilhafte Ausgestaltungen und Weiterbildungen der Erfindung sind in den Unteransprüchen beschrieben.

Erfindungsgemäß umfasst eine kartesische Positioniervorrichtung zum Positionieren einer Optik ein erstes Stellelement, oder y-Stellelement, für eine lineare Bewegung einer Optikfassung entlang einer ersten kartesischen Achse, d.h. in y-Richtung, und ein zweites Stellelement, oder x-Stellelement, für eine lineare Bewegung der Optikfassung entlang einer zweiten kartesischen Achse, d.h. in x-Richtung, wobei sowohl das erste als auch das zweite Stellelement entlang der ersten kartesischen Achse, d. h. entlang der y-Richtung, verstellbar ist. Selbstverständlich stehen die erste und die zweite kartesische Achse, d. h. die y-Richtung und die x-Richtung, senkrecht zueinander. Mit anderen Worten sind das x- und das y-Stellelement parallel zueinander verstellbar. Die Stellelemente können beispielsweise als Gewindespindeln ausgebildet sein. Dies ermöglicht eine kompakte Bauweise sowie eine unabhängige Positionierung entlang zweier kartesischer Achsen. Die kartesischen Achsen, d.h. x-Achse und y-Achse, bezeichnen die Achsen eines kartesischen Koordinatensystems, dessen dritte Achse die z-Achse ist.

Die beiden Stellelemente sind nebeneinander auf einem Trägerelement, an dem die Optikfassung befestigt ist, angeordnet. Dies ermöglicht eine übersichtliche Bedienung und vereinfachte Zugänglichkeit.

In einem bevorzugten Ausführungsbeispiel ist zumindest eines der beiden Stellelemente geeicht. Mit anderen Worten kann ein bestimmter Verstellwert eines der Stellelemente einem bestimmten Wert für die lineare Bewegung entlang der entsprechenden kartesischen Achse zugeordnet sein. Hierzu kann das y-Stellelement und/oder das x-Stellelement jeweils eine Mikrometerschraube umfassen. Dadurch wird eine Positionierung der Optik reproduzierbar und eine exakte Positionierung der Optik in einem optischen System vereinfacht.

Ein Ende des y-Stellelements ist als y-Schieber ausgebildet. Ebenso kann ein Ende des x-Stellelements als x-Schieber ausgebildet sein. Der y-Schieber verbindet das y-Stellelement mit der Optikfassung beweglich. Der x-Schieber kann das x-Stellelement mit der Optikfassung beweglich verbinden. Der x-Schieber und/oder der y-Schieber können entlang mindestens einem Schieber-Führungselement geführt sein.

Das y-Stellelement bzw. der y-Schieber ist mit der Optikfassung mittels einer Linearführungseinheit in x-Richtung beweglich gekoppelt. Beispielsweise können das y-Stellelement bzw. der y-Schieber und die Optikfassung über ein Schienen- oder Schlittensystem beweglich miteinander verbunden sein. Vorzugsweise weist hierbei die Linearführungseinheit einen ersten Teil auf, der an einem ausgewählt von dem y-Stellelement (bzw. y-Schieber) und der Optikfassung angeordnet ist, und einen zweiten Teil, der an dem anderen ausgewählt von dem y-Stellelement (bzw. y-Schieber) und der Optikfassung angeordnet ist. Hierbei kann der erste Teil der Linearführungseinheit einen Hinterschnitt aufweisen, in dem ein mit entsprechender Form ausgebildeter Vorsprung des zweiten Teils der Linearführungseinheit geführt ist. Ein Beispiel für die Linearführungseinheit ist eine Schwalbenschwanzführung. Vorzugsweise ist die Verbindung des y-Stellelements bzw. des y-Schiebers mit der Optikfassung zug- und/oder druckinvariant. Dadurch wird eine exakte Einstellung einer gewünschten Position, z.B. durch Zug oder Druck, ermöglicht, ohne durch Spiel in der Verbindung beeinträchtigt zu werden.

Ein Übertragungselement kann zwischen dem x-Schieber und der Optikfassung angeordnet sein. Das Übertragungselement kann in x-Richtung beweglich mit dem Trägerelement verbunden bzw. darin gelagert sein. Das Übertragungselement kann durch eine erste Führungseinheit mit der Optikfassung beweglich verbunden sein. Die erste Führungseinheit kann zum Führen der Optikfassung in y-Richtung eingerichtet sein. Beispielsweise umfasst die erste Führungseinheit eine Linearführungseinheit, etwa eine Schwalbenschwanzführung. Die erste Führungseinheit kann eine sich in y-Richtung erstreckende erste Führung, z.B. ein Langloch, und einen darin geführten ersten Führungszapfen umfassen. Die erste Führung kann in einem ausgewählt von dem Übertragungselement und der Optikfassung ausgebildet sein und der erste Führungszapfen kann in dem anderen ausgewählt von dem Übertragungselement und der Optikfassung ausgebildet sein. Das Übertragungselement kann durch eine zweite Führungseinheit mit dem x-Schieber beweglich verbunden sein. Die zweite Führungseinheit kann eingerichtet sein, um eine Verstellbewegung des x-Stellelements entlang der y-Richtung in eine Bewegung des Übertragungselements entlang einer vorgegebenen Richtung, die mit der y-Richtung einen Winkel kleiner 90°, vorzugsweise einen Winkel von ungefähr 45°, bildet, umzuwandeln. Die zweite Führungseinheit kann eine sich in der vorgegebenen Richtung erstreckende zweite Führung, z.B. ein Langloch, und einen darin geführten zweiten Führungszapfen umfassen. Die zweite Führung kann in einem ausgewählt von dem Übertragungselement und dem x-Stellelement (bzw. x-Schieber) ausgebildet sein und der zweite Führungszapfen kann in dem anderen ausgewählt von dem Übertragungselement und dem x-Stellelement (bzw. x-Schieber) ausgebildet sein. Durch Verstellen des x-Stellelements (bzw. des x-Schiebers) in y-Richtung kann die zweite Führungseinheit das Übertragungselement und damit die Optikfassung in x-Richtung verschieben. Vorzugsweise wird die lineare Verstellbewegung des x-Stellelements entlang der y-Richtung durch die diagonal ausgerichtete zweite Führung in eine Bewegung des Übertragungselements in x-y-Ebene umgewandelt. Durch die Linearführungseinheit, die das y-Stellelement und die Optikfassung miteinander koppelt, kann die Bewegung des Übertragungselements in eine lineare Bewegung der Optikfassung in x-Richtung umgewandelt werden.

Das x-Stellelement bzw. der x-Schieber kann mit der Optikfassung über ein Hebelelement beweglich gekoppelt sein. Somit kann ein Verstellen des x-Stellelements über ein Hebelelement auf die Optikfassung übertragbar sein. Vorzugsweise weist das Hebelelement ein erstes Ende und ein zweites Ende auf, wobei das Hebelelement an seinem ersten Ende mit dem x-Stellelement bzw. dem x-Schieber und an seinem zweiten Ende mit dem Trägerelement gekoppelt ist. Mit der Optikfassung kann das Hebelelement an einem Punkt zwischen dem ersten Ende und dem zweiten Ende gekoppelt sein. Das Hebelelement kann am Trägerelement über ein Drehgelenk verbunden sein. Vorzugsweise ist das Hebelelement in der x-y-Ebene schwenkbar am Trägerelement befestigt. Weiterhin kann das Hebelelement durch eine erste Führungseinheit mit der Optikfassung beweglich verbunden sein. Ebenso kann das Hebelelement durch eine zweite Führungseinheit mit dem x-Stellelement bzw. mit dem x-Schieber beweglich verbunden sein. Die erste Führungseinheit kann dazu eingerichtet sein, die Optikfassung linear in y-Richtung zu führen. Vorzugsweise erlaubt die erste Führungseinheit auch eine Drehung des Hebels um den ersten Führungszapfen. Die zweite Führungseinheit kann dazu eingerichtet sein, eine Verstellbewegung des x-Stellelements auf das Hebelelement zu übertragen. Vorzugsweise wird die lineare Verstellbewegung des x-Stellelements entlang der y-Richtung als Schwenkbewegung des Hebelelements in x-y-Ebene umgewandelt. Die zweite Führung kann gebogen oder gekrümmt ausgebildet sein. Vorzugsweise erlaubt die zweite Führungseinheit eine Drehung des Hebels um den zweiten Führungszapfen. Durch die Linearführungseinheit, die das y-Stellelement und die Optikfassung miteinander koppelt, kann die Schwenkbewegung des Hebelelements in eine lineare Bewegung der Optikfassung in x-Richtung umgewandelt werden.

Das Hebelelement kann L-förmig ausgebildet sein. Hierbei kann das Hebelelement mit der Optikfassung in dem Bereich gekoppelt sein, in dem sich beide Schenkel der L-Form treffen. Die erste Führungseinheit kann also an einem Knickpunkt des L-förmigen Hebelelements angeordnet sein. Die L-Form des Hebelelements erlaubt eine noch kompaktere Bauweise.

In einem bevorzugten Ausführungsbeispiel ist ein Teil der ersten Führungseinheit, z.B. der erste Führungszapfen bzw. die erste Führung, auf einem Befestigungsfortsatz der Optikfassung angeordnet. Der Befestigungsfortsatz der Optikfassung kann sich in y-Richtung zum Trägerelement hin erstrecken. Dies ermöglicht eine kompakte Anordnung der Übertragungselemente der x- und y-Stellbewegung auf die Optikfassung.

Die erste Führungseinheit kann einen ersten Führungszapfen sowie eine erste Führung umfassen. Ebenso kann die zweite Führungseinheit kann einen zweiten Führungszapfen sowie eine zweite Führung umfassen. Hierbei sind vorzugsweise der erste Führungszapfen und/oder der zweite Führungszapfen auf dem Hebelelement oder auf dem Übertragungselement ausgebildet. Dies vereinfacht die Produktionsabläufe. Die erste und/oder zweite Führung kann eine Aussparung, eine Führungsrille, oder ein Loch, insbesondere ein Langloch, umfassen. Die erste Führung ist vorzugsweise an der Optikfassung ausgebildet. Die zweite Führung ist vorzugsweise an dem x-Stellelement bzw. x-Schieber ausgebildet.

Ferner kann mindestens ein Schieber-Führungselement vorgesehen sein, das eine Bewegung des x-Schiebers oder des y-Schiebers in y-Richtung führt. Das Schieber-Führungselement kann als Führungsstift oder Führungsrippe entweder am x- bzw. y-Schieber oder am Trägerelement ausgebildet sein. Eine entsprechende Nut oder Bohrung kann an dem anderen von dem x- bzw. y-Schieber und dem Trägerelement ausgebildet sein, in der das Schieber-Führungselement geführt ist. Das Schieber-Führungselement kann auch als ein Teil einer Schwalbenschwanzführung ausgebildet sein, wobei der andere Teil der Schwalbenschwanzführung dem x- bzw. y-Schieber ausgebildet sein kann. Dadurch kann eine y-Verstellbewegung des x- bzw. y-Schiebers stabilisiert werden.

Ferner kann mindestens ein Federelement zwischen der Optikfassung und dem Trägerelement angeordnet sein. Das Federelement kann eingerichtet sein, um eine Rückstellkraft auf die Optikfassung in Richtung des Trägerelements bereitzustellen. Dies dient ebenfalls der Stabilisierung der Bewegung der Optikfassung. Zudem kann durch die Rückstellkraft des Federelements ein Leerlauf bei Richtungswechsel verhindert werden.

Weiterhin umfasst erfindungsgemäß ein Laserbearbeitungskopf zum Bearbeiten eines Werkstücks mittels eines Laserstrahls eine kartesische Positioniervorrichtung zum Positionieren einer Optik gemäß einem der beschriebenen Ausführungsbeispiele. Vorzugsweise ist die Optik in einem Strahlengang des Laserbearbeitungskopfs angeordnet. Das Trägerelement der kartesischen Positioniervorrichtung kann mittels Befestigungsmittel, beispielsweise Schrauben, an einem Gehäuse des Laserbearbeitungskopfs angebracht sein. Eine optische Achse des Laserbearbeitungskopfs verläuft vorzugsweise in z-Richtung des kartesischen Koordinatensystems, d. h. senkrecht zur x-y Ebene.

Die Begriffe x-Richtung, x-Stellelement, x-Schieber sind jeweils gleich bedeutend mit erste Richtung, erstes Stellelement, erster Schieber und können dadurch ersetzt werden. Die Begriffe y-Richtung, y-Stellelement, y-Schieber sind jeweils gleich bedeutend mit zweite Richtung, zweites Stellelement, zweiter Schieber und können dadurch ersetzt werden. Die erste bzw. x-Richtung steht senkrecht auf der zweiten bzw. y-Richtung.

Die Erfindung wird im Folgenden beispielsweise anhand der Zeichnungen näher erläutert. Es zeigen:
Figur 1 eine schematische Draufsicht auf eine kartesische Positioniervorrichtung gemäß einer Ausführungsform der vorliegenden Erfindung;
Figur 2 eine Draufsicht der kartesischen Positioniervorrichtung aus Figur 1 mit zwei Federelementen;
Figur 3 eine Draufsicht der kartesischen Positioniervorrichtung aus Figur 1, die in y-Richtung verschoben ist;
Figur 4 eine Draufsicht der kartesischen Positioniervorrichtung aus Figur 1, die in x-Richtung verschoben ist;
Figuren 5a und 5b perspektivische Seitenansichten der kartesischen Positioniervorrichtung gemäß einem weiteren Ausführungsbeispiel;
Figuren 6a und 6b eine Frontansicht und eine Draufsicht eines Teils der kartesischen Positioniervorrichtung aus Figur 5;
Figuren 7a und 7b eine Draufsicht und eine Seitenansicht einer Optikfassung der kartesischen Positioniervorrichtung aus Figur 5; und
Figuren 8a und 8b eine Draufsicht und eine Seitenansicht eines Übetragungselements der kartesischen Positioniervorrichtung aus Figur 5.

In den Figuren werden einander entsprechende Bauteile mit gleichen Bezugszeichen versehen.

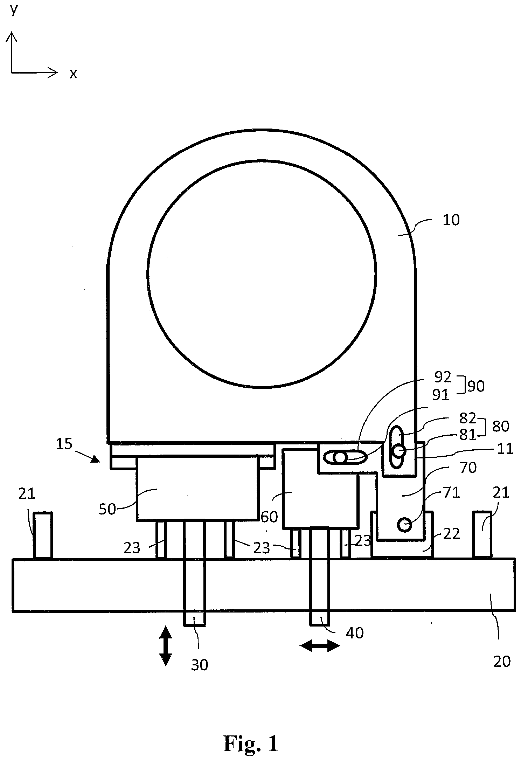

Figur 1 zeigt eine schematische Draufsicht einer kartesischen Positioniervorrichtung zum Positionieren einer Optik gemäß einer ersten Ausführungsform der vorliegenden Erfindung. Die Positioniervorrichtung umfasst ein Trägerelement 20, an dem eine Optikfassung 10 zum Halten einer Optik befestigt ist. Das Trägerelement 20 kann über Befestigungsmittel 21, wie beispielsweise Schrauben, an einem Gehäuse eines Laserbearbeitungskopfs befestigt werden, so dass die Optik im Strahlengang des Laserbearbeitungskopfes angeordnet werden kann. Die Optikfassung 10 kann mittels zweier Stellelemente 30 und 40 jeweils entlang einer ersten und einer zweiten kartesischen Achse linear verschoben werden. Hierbei ist eine Verschiebung entlang der ersten kartesischen Achse unabhängig von einer Verschiebung entlang der zweiten kartesischen Achse. Die zwei kartesischen Achsen werden im Folgenden als x-Achse und y-Achse bezeichnet und sind Achsen eines kartesischen bzw. orthogonalen Koordinatensystems. Ebenso bezeichnet eine Bewegung in x-Richtung bzw. in y-Richtung eine Bewegung entlang der x-Achse bzw. entlang der y-Achse. Eine Bewegung in x-Richtung ist unabhängig von einer Bewegung in y-Richtung und weist somit keine Komponente in y-Richtung auf.

Das erste Stellelement zum Verschieben der Optikfassung 10 entlang der y-Achse, also das y-Stellelement 30, durchdringt das Trägerelement 20, so dass ein Ende des y-Stellelements 30 von einer Außenseite des Trägerelements 20 für einen Positioniervorgang der Optikfassung 10 in y-Richtung zugänglich ist. An dem anderen Ende des y-Stellelements ist ein y-Schieber 50 angeordnet, über den das y-Stellelement 30 mit der Optikfassung 10 gekoppelt ist. Hierbei sind der y-Schieber 50 und die Optikfassung 10 über eine Linearführungseinheit 15 miteinander beweglich verbunden.

Die Linearführungseinheit 15 kann beispielsweise einen Schlitten, der am y-Schieber 50 ausgebildet ist, und eine Schienenführung, die an der Optikfassung 10 ausgebildet ist, umfassen. Die Linearführungseinheit 15 ist in x-Richtung angeordnet und erlaubt eine lineare Bewegung der Optikfassung 10 in x-Richtung. Der y-Schieber 50 kann beispielsweise eine Schwalbenschwanznut aufweisen, in der eine passend geformte Schiene der Optikfassung 10 geführt wird. Selbstverständlich kann auch umgekehrt eine Schwalbenschwanznut an der Optikfassung 10 vorgesehen sein und die passende Schiene am y-Schieber 50. Vorzugsweise ist die Linearführungseinheit 15 so ausgebildet, dass die Verbindung zwischen dem y-Schieber 50 und der Optikfassung 10 zug- und druckinvariant ist. Dadurch kann ein Leerlauf bei Richtungswechsel der y-Stellbewegung verhindert werden. Bei einer Stellbewegung des y-Stellelements 30 in y-Richtung wird der y-Schieber 50, der mit der Optikfassung 10 in y-Richtung fest gekoppelt ist, ebenfalls in y-Richtung verschoben und verschiebt entsprechend die Optikfassung 10 durch Zug bzw. Druck entlang der y-Achse.

Das zweite Stellelement zum Verschieben der Optikfassung 10 entlang der x-Achse, also das x-Stellelement 40, durchdringt ebenfalls das Trägerelement 20, so dass ein Ende des x-Stellelements 40 von einer Außenseite des Trägerelements 20 für einen Positioniervorgang der Optikfassung 10 in x-Richtung zugänglich ist. An dem anderen Ende des x-Stellelements 40 ist ein x-Schieber 60 angeordnet, der beweglich über ein Hebelelement 70 mit der Optikfassung 10 gekoppelt ist.

Das Hebelelement 70 ist über ein Drehgelenk 71 am Trägerelement 20 befestigt, so dass das Hebelelement 70 in x-y-Ebene um das Drehgelenk 71 schwenkbar ist. Hierzu kann das Trägerelement 20 einen Befestigungsfortsatz 22 aufweisen, der sich von einer Innenseite des Trägerelements 20 in y-Richtung zur Optikfassung 10 hin erstreckt, um eine Schwenkbewegung des Hebelelements 70 um das Drehgelenk 71 zu erleichtern. Das Hebelelement 70 ist über eine erste Führungseinheit 80 mit der Optikfassung 10 und über eine zweite Führungseinheit 90 mit dem x-Schieber 60 beweglich verbunden. Wenn das Hebelelement 70 - wie in Figur 1 gezeigt - L-förmig ausgebildet ist, kann an einem Ende der L-Form das Drehgelenk 71 vorgesehen sein, am Knickpunkt, wo sich beide Schenkel der L-Form treffen, die erste Führungseinheit 80 und am anderen Ende die zweite Führungseinheit 90. Das ermöglicht eine platzsparende Anordnung zur Umsetzung der linearen Stellbewegung des x-Stellelements 40 in y-Richtung in eine Schwenkbewegung des Hebelelements 70 in der x-y-Ebene.

Die erste Führungseinheit 80 umfasst einen ersten Führungszapfen 81, der in einer ersten Führung 82 läuft. Beispielsweise verläuft die erste Führung 82 geradlinig in y-Richtung. Vorzugsweise ist der erste Führungszapfen 81 auf dem Hebelelement 70 ausgebildet, während die erste Führung 82, wie beispielsweise eine Nut oder ein Langloch, in der Optikfassung 10 ausgebildet ist. Die erste Führungseinheit 80 erlaubt also eine lineare Bewegung der Optikfassung 10 in y-Richtung. Zum Ausführen einer Schwenkbewegung des Hebelelements 70 um das Drehgelenk 71 weist die zweite Führungseinheit 90 ferner einen zweiten Führungszapfen 91 auf, der in einer zweiten Führung 92 läuft. Auch wenn es in den Figuren der Einfachheit halber anders dargestellt ist, ist die zweite Führung 92, wie beispielsweise eine Nut oder ein Langloch, vorzugsweise am x-Schieber 60 ausgebildet, während der zweite Führungszapfen 91 am Hebelelement 70 vorgesehen ist. Die Erfindung ist jedoch nicht hierauf beschränkt. Das Ausbilden des ersten Führungszapfens 81 und/oder des zweiten Führungszapfens 91 auf dem Hebelelement 70 vereinfacht jedoch die Fertigung. Die zweite Führung 92 kann gebogen oder gekrümmt ausgebildet sein. Sowohl die erste Führung 82 als auch die zweite Führung 92 lassen eine Drehbewegung des jeweiligen ersten bzw. zweiten Führungszapfens 81 und 91 zu.

Bei einer Stellbewegung des x-Stellelements 40 entlang der y-Achse wird das Hebelelement 70 um das Drehgelenk 71 geschwenkt, wodurch die Optikfassung 10, die durch die Linearführungseinheit 15 in y-Richtung fixiert ist, entlang der Linearführungseinheit 15 in x-Richtung verschoben wird. Eine Stellbewegung des y-Stellelements 30 wird über den y-Schieber 50 auf die Optikfassung 10 unmittelbar übertragen, wobei die Optikfassung 10 durch die erste Führungseinheit 80 in y-Richtung linear geführt wird.

Die Optikfassung 10 kann einen Befestigungsfortsatz 11 aufweisen, der sich von der Optikfassung 10 in y-Richtung zum Trägerelement 20 hin erstreckt. Auf dem Befestigungsfortsatz 11 kann ein Teil der ersten Führungseinheit 80, d.h. der erste Führungszapfen 81 oder die erste Führung 82, angeordnet sein. Dies ermöglicht ebenfalls eine kompakte Anordnung der Elemente zum Übertragen der Stellbewegung des x-Stellelements 40 in y-Richtung in eine Bewegung entlang der x-Achse der Optikfassung 10.

Sowohl das y-Stellelement 30 als auch das x-Stellelement 40 sind axial fixiert, so dass eine Bewegung der Optikfassung 10 in die jeweils andere kartesische Richtung verhindert wird. Sowohl das y-Stellelement 30 als auch das x-Stellelement 40 sind parallel zueinander entlang der y-Richtung verstellbar. Das x- und/oder y-Stellelement ist vorzugsweise geeicht, so dass einer bestimmten Stellbewegung ein genauer Wert der Verschiebung der Optikfassung 10 entlang der entsprechenden kartesischen Achse zugeordnet werden kann. Als geeichtes Stellelement kann beispielsweise eine Mikrometerschraube verwendet werden.

Um die Bewegung des y-Schiebers 50 bzw. des x-Schiebers 60 zu stabilisieren, können am Trägerelement 20 Schieber-Führungselemente 23 vorgesehen sein, wie beispielsweise Führungsstifte, die jeweils in einer entsprechenden Bohrung des y-Schiebers 50 bzw. des x-Schiebers 60 laufen. Alternativ können die Schieber-Führungselemente 23 auch am y-Schieber 50 bzw. am x-Schieber 60 vorgesehen sein und in entsprechenden Bohrungen im Trägerelement 20 geführt sein.

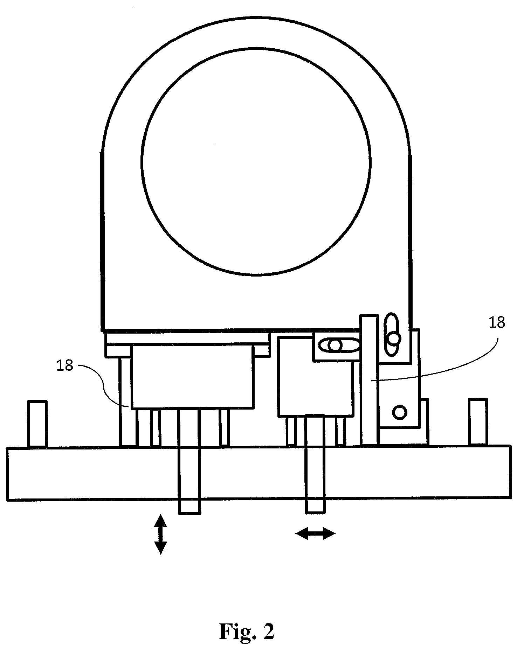

Figur 2 zeigt die kartesischen Positioniervorrichtung aus Figur 1, wobei ferner Federelemente 18 zwischen der Optikfassung 10 und dem Trägerelement 20 vorgesehen sind, um einen Leerlauf bei Richtungswechsel zu verhindern.

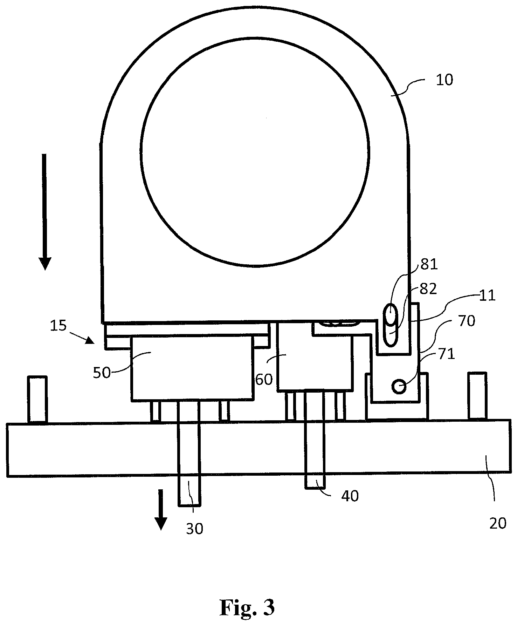

Figur 3 zeigt die kartesische Positioniervorrichtung aus Figur 1, wobei das y-Stellelement 30 um einen vorgegeben Betrag in y-Richtung (nach unten) verstellt worden ist. Hierdurch wird die über die Linearführungseinheit 15 und dem y-Schieber 50 mit dem y-Stellelement 30 verbundene Optikfassung 10 ebenfalls in y-Richtung gezogen, wobei der erste Führungszapfen 81 in der ersten Führung 82 verschoben wird.

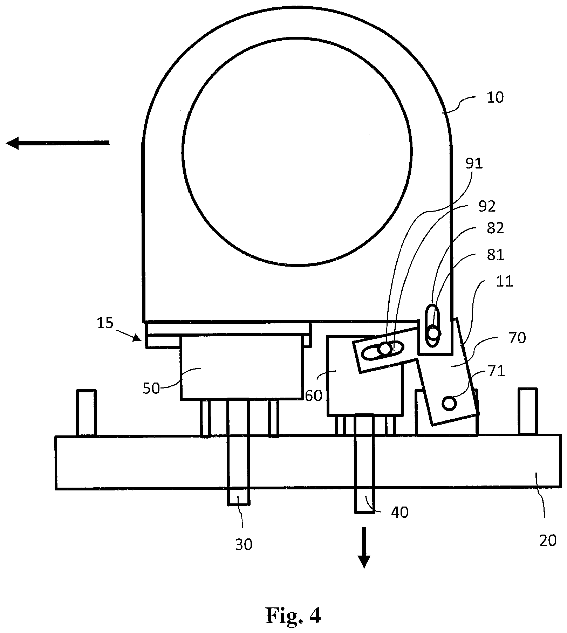

Figur 4 zeigt die kartesische Positioniervorrichtung aus Figur 1, wobei das x-Stellelement 40 um einen vorgegebenen Betrag in y-Richtung (nach unten) verstellt worden ist. Hierdurch wird das Hebelelement 70 um das Drehgelenk 71 in der x-y-Ebene geschwenkt, wobei der zweite Führungszapfen 91 entlang der zweiten Führung 92 geführt wird. Die Schwenkbewegung des Hebelelements 70 wird über die erste Führungseinheit 80 auf die Optikfassung 10 übertragen und durch die Linearführungseinheit 15 in eine lineare x-Bewegung umgewandelt.

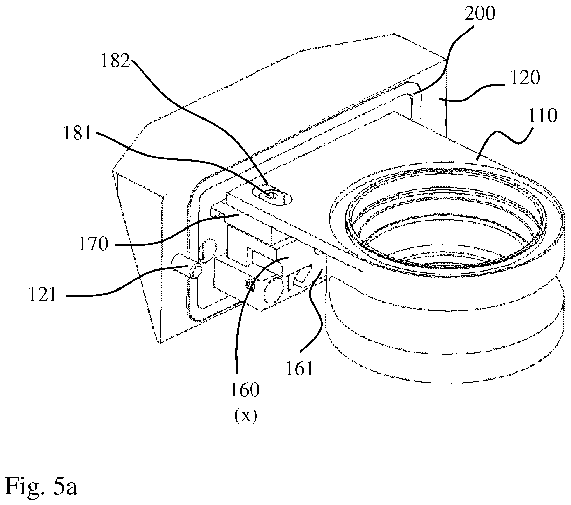

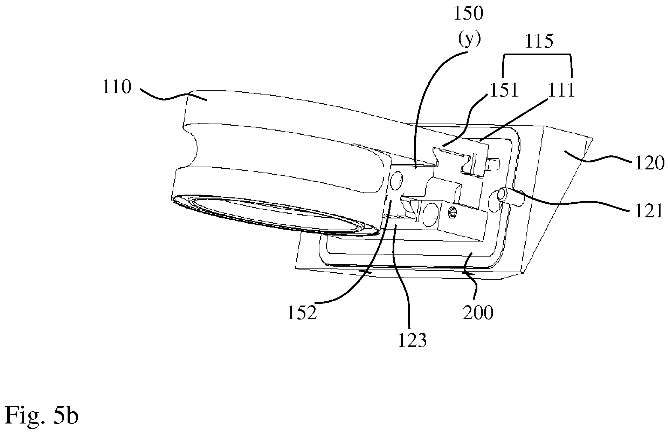

In Figuren 5 bis 8 ist eine zweite Ausführungsform der erfindungsgemäßen kartesischen Positioniervorrichtung gezeigt. In dieser Ausführungsform wird statt der Schwenkbewegung des Hebelelements 70 eine Diagonalverschiebung eines Übertragungselements 170 zur Umwandlung der Verstellbewegung des x-Stellelements 140 in y-Richtung in eine Verschiebung der Optikfassung 110 in x-Richtung verwendet. Dies ermöglicht eine kompakte, stabile und spielfreie Bauform.

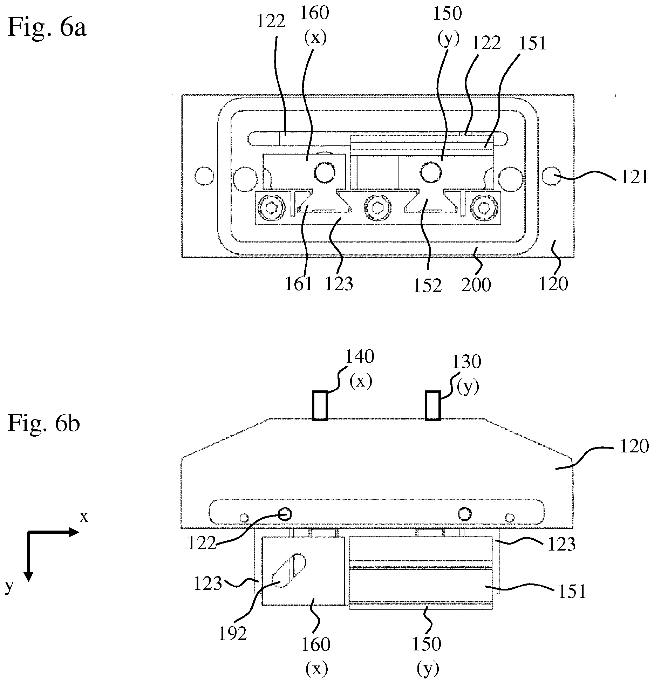

In Figuren 5a und 5b sind perspektivische Seitenansichten der kartesischen Positioniervorrichtung gemäß der zweiten Ausführungsform gezeigt. Wie in der ersten Ausführungsform umfasst die Positioniervorrichtung ein Trägerelement 120, an dem eine Optikfassung 110 zum Halten einer Optik in x-Richtung und in y-Richtung verstellbar gelagert ist. Das Trägerelement 120 kann Befestigungsmittel 121 zur Befestigung an einem Laserbearbeitungskopf umfassen. Des Weiteren kann ein Dichtungselement 200 vorgesehen sein, um das Trägerelement 120 und den Laserbearbeitungskopf gegen Staubpartikel u.ä. abzudichten. Zum Verschieben der Optikfassung 110 sind ein y-Stellelement 130 und ein x-Stellelement 140 (siehe Fig. 6b) am Trägerelement 120 vorgesehen, die parallel zueinander in y-Richtung verstellbar sind und jeweils einen y-Schieber 150 und einen x-Schieber 160 aufweisen. Zwischen dem x-Schieber 160 und der Optikfassung 110 ist ein Übertragungselement 170 angeordnet, um eine Stellbewegung des x-Stellelements 140 bzw. x-Schiebers 160, die in y-Richtung erfolgt, in eine Verschiebung der Optikfassung 110 in x-Richtung umzuwandeln. In Fig. 5a ist eine in der Optikfassung 110 ausgebildete erste Führung 182 erkennbar, in der ein erster Führungszapfen 181 des Übertragungselements 170 in y-Richtung geführt ist. Dies erlaubt eine Verschiebung der Optikfassung 110 in y-Richtung bzgl. des x-Schiebers 160.

Wie aus Fig. 5b ersichtlich, ist der y-Schieber 150 mit der Optikfassung 110 über eine Linearführungseinheit 115 verbunden, die für die Führung einer Bewegung der Optikfassung 110 bzgl. des y-Schiebers 150 in x-Richtung eingerichtet ist. Hierbei sind ein x-Linearführungselement 111 an der Optikfassung 110 und ein entsprechendes x-Linearführungselement 151 am y-Schieber 150 ausgebildet. Die Linearführungseinheit 115 kann eine Schwalbenschwanzführung umfassen, wie in Fig. 5b gezeigt.

In der Optikfassung 110 kann eine Einkerbung, wie in Fig. 5a und 5b gezeigt, vorgesehen sein, in der mindestens ein Federelement 118 eingesetzt sein kann, um die Optikfassung 110 mit dem Trägerelement 120 zu verbinden. Das mindestens eine Federelement 118 kann angeordnet sein, um eine Rückstellkraft auf die Optikfassung 110 zum Trägerelement hin bereitzustellen. Beispielsweise kann das mindestens eine Federelement 118 um eine Seite der Optikfassung 110 herumlaufen und jeweils benachbart zum x-Schieber 160 und zum y-Schieber 150 am Trägerelement 120 befestigt sein. Dadurch können Toleranzen in der Stellbewegung der Stellelemente 130 und 140 bzw. beim Verschieben der Optikfassung 110 verringert werden.

Zur Stabilisierung zumindest eines von dem y-Schieber 150 bzw. dem x-Schieber 160 kann ein Schieberführungselement 123 vorgesehen sein, das für eine Linearführung in y-Richtung eingerichtet ist. Beispielsweise kann das Schieberführungselement 123 stabförmig ausgebildet sein und in einer Bohrung des y-Schiebers 150 bzw. des x-Schiebers 160 geführt sein. Alternativ kann in dem Schieberführungselement 123 mindestens eine Schwalbenschwanzführung ausgebildet sein, um den y-Schieber 150 bzw. den x-Schieber 160 in y-Richtung zu führen.

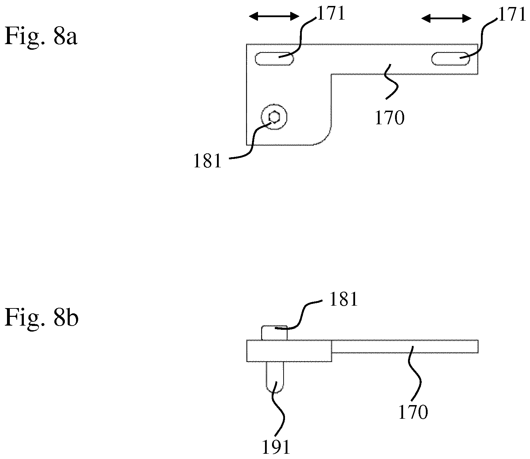

In Fig. 6a und 6b ist ein Teil einer Positioniervorrichtung ohne die Optikfassung 110 und das Übertragungselement 170 gezeigt. Das Trägerelement 120 und das Übertragungselement 170 können über eine x-Linearführungseinheit gekoppelt sein. Hierfür kann das Trägerelement 120 vorzugsweise einen sich in x-Richtung erstreckenden Führungsschlitz aufweisen, in das zumindest ein Teil des Übertragungselement 170 eingesetzt ist. Alternativ kann das Trägerelement 120 mit dem Übertragungselement 170 durch eine Schwalbenschwanzführung gekoppelt sein. Im Trägerelement 120 kann ferner mindestens ein Befestigungselement 122 vorgesehen sein, um das Übertragungselement 170 mit dem Trägerelement 120 zu verbinden. In Fig. 6a sind beispielhaft zwei stabförmige Befestigungselemente 122, etwa Schrauben oder Bolzen, gezeigt, die im Führungsschlitz des Trägerelements 120 angeordnet sind. Die Befestigungselemente 122 sind in die in Fig. 8a gezeigten Übertragungselementführungen 171 eingesetzt, um das Übertragungselement 170 am Trägerelement 120 in x-Richtung beweglich zu koppeln. Alternativ kann das Übertragungselement 170 Führungszapfen aufweisen die in einer im Trägerelement 120 bzw. im Führungsschlitz ausgebildeten Nut laufen.

In Fig. 6a ist ein Schieberführungselement 123 mit zwei Schwalbenschwanzführungen gezeigt, um sowohl den y-Schieber 150 und den x-Schieber 160 zu stabilisieren. Selbstverständlich kann auch nur einer der zwei Schieber 150 und 160 durch das Schieberführungselement 123 geführt werden. Ein entsprechendes Gegenstück zu der Führung des Schieberführungselements 123 ist als y-Linearführungselement 152 im y-Schieber 150 bzw. als y-Linearführungselement 161im x-Schieber 160 ausgebildet. Der y-Schieber 150 kann folglich zwei senkrecht zueinander angeordnete Linearführungselemente umfassen, wie das x-Linearführungselement 151, um die Optikfassung 110 in x-Richtung auf dem y-Schieber 150 zu führen, und das y-Linearführungselement 152, um die Stellbewegung des y-Schiebers 150 in y-Richtung zu führen. Der x-Schieber 160 kann zumindest das y-Linearführungselement 161 zum Führen der Verstellbewegung des x-Schiebers 160 in y-Richtung umfassen. Es können aber auch ein oder mehrere weitere Linearführungselement vorgesehen sein. Beispielsweise können ineinander wirkende Linearführungselemente am x-Schieber 160 und am y-Schieber 150 vorgesehen sein, um eine relative Bewegung zueinander in y-Richtung zu stabilisieren.

In Fig. 6b ist das x-Linearführungselement 151 des y-Schiebers 150 erkennbar, auf dem die Optikfassung 110 in x-Richtung verschiebbar ist. Außerdem weist der x-Schieber 160 eine Diagonalführung bzw. zweite Führung 192 auf, die mit der y-Richtung bzw. mit der x-Richtung einen Winkel von ungefähr 45° bildet. In der zweiten Führung 192 des x-Schiebers ist ein zweiter Führungszapfen 191 des Übertragungselements 170 eingesetzt (siehe Fig. 8b), um das Übertragungselement 170 in einer Richtung von ungefähr 45° zur y-Richtung bei einer Verstellbewegung des x-Schiebers 160 in y-Richtung zu verschieben.

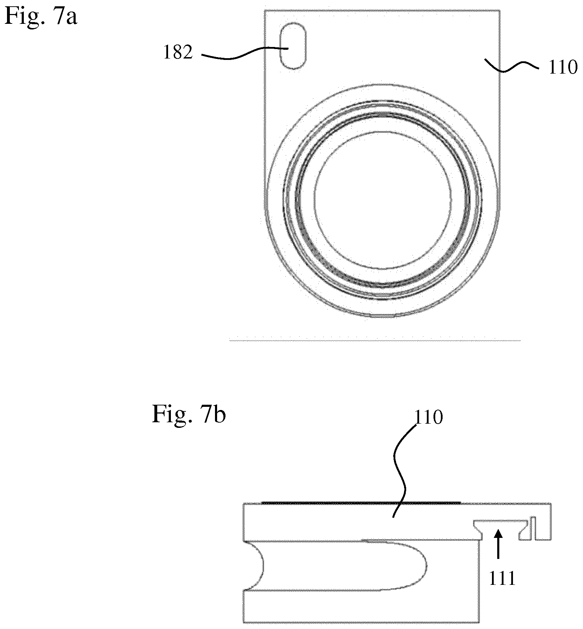

Fig. 7a und 7b zeigen Ansichten der Optikfassung 110. Die Optikfassung 110 weist ein x-Linearführungselement 111 auf, das mit dem x-Linearführungselement 151 des y-Schiebers 150 eine Linearführungseinheit bildet. Mit anderen Worten sind die Optikfassung 110 und der y-Schieber 150 über eine Linearführung in x-Richtung beweglich miteinander gekoppelt. Die Optikfassung 110 weist zudem eine erste Führung 182 auf, die eine Bewegung in y-Richtung führt. Die erste Führung 182 ist in einem Winkel 45° zur zweiten Führung 192 im x-Schieber 160 ausgebildet. In die erste Führung 182 der Optikfassung 110 ist ein erster Führungszapfen 181 des Übertragungselements 170 eingesetzt, um eine Bewegung der Optikfassung in y-Richtung bzgl. des x-Schiebers zu ermöglichen.

In Fig. 8a und 8b ist das Übertragungselement 170 gezeigt. Das Übertragungselement 170 hat vorzugsweise eine L-Form, auf deren einem Schenkel mindestens eine Übertragungselementführung 171, z.B. ein (in x-Richtung erstreckend) Schlitz oder Langloch, ausgebildet ist, und auf deren anderem Schenkel der erste und zweite Führungszapfen 181 und 191 in entgegengesetzte Richtungen senkrecht zur x- und zur y-Richtung vorstehen. Mit anderen Worten sind der erste und zweite Führungszapfen 181 und 191 auf gegenüberliegenden Oberflächen des Übertragungselements 170 ausgebildet. Der erste und zweite Führungszapfen 181 und 191 können auch durch einen Bolzen oder durch eine Schraube gebildet sein, der bzw. die das Übertragungselement durchdringt. Da der erste Führungszapfen 181 in der ersten Führung 182 der Optikfassung 110 in y-Richtung geführt wird, kann die Optikfassung 110 bei Verstellen des y-Schiebers 150 bezüglich des x-Schiebers 160 in y-Richtung verschoben werden. Durch Führung des zweiten Führungszapfens 191 des mit der Optikfassung 110 gekoppelten Übertragungselements 170 in der Diagonalführung 192 des x-Schiebers 160 sowie durch die Linearführungseinheit 115, die die Optikfassung 110 und den y-Schieber 150 in x-Richtung beweglich koppelt, wird eine Verstellbewegung des x-Schiebers 160 in y-Richtung in eine Verschiebung der Optikfassung 110 in x-Richtung umgewandelt bzw. übertragen.

Es versteht sich von selbst, dass konkave bzw. konvexe Bereiche, z.B. einer Linearführung oder einer Schwalbenschwanzführung, miteinander vertauscht werden können.

Somit kann erfindungsgemäß eine kartesische Positioniervorrichtung angegeben werden, die eine genaue und reproduzierbare Positionierung einer Optik in x-Richtung und in y-Richtung ermöglicht, wobei eine Positionierung in den beiden kartesischen Richtungen x und y unabhängig voneinander ist. Darüber hinaus kann durch Verwendung von geeichten Stellelementen, wie beispielsweise Mikrometerschrauben, einer bestimmten Stellbewegung bzw. einem Drehwinkel des Stellelements ein genauer Wert der Linearbewegung der Optikfassung 10 entlang der entsprechenden x- bzw. y-Achse zugeordnet werden. Da sowohl das y-Stellelement 30 als auch das x-Stellelement 40 in derselben Richtung, d. h. parallel zueinander entlang der y-Richtung, verstellbar sind, können beide Stellelemente 30 und 40 nebeneinander an dem Trägerelement 20 angeordnet werden. Dadurch wird eine Zugänglichkeit der Stellelemente für einen Benutzer verbessert und zudem eine platzsparende Anordnung der Stellelemente ermöglicht.

**Liste der Bezugszeichen:**

| | | | |
|---|---|---|---|
| 10 | Optikfassung | 90 | zweite Führungseinheit |
| 11 | Befestigungsfortsatz | 91 | zweiter Führungszapfen |
| 15 | Linearführungseinheit | 92 | zweite Führung |
| 18 | Federelement | 110 | Optikfassung |
| 20 | Trägerelement | 111 | x-Linearführungselement |
| 21 | Befestigungsmittel | 115 | Linearführungseinheit |
| 22 | Befestigungsfortsatz | 118 | Federelement |
| 23 | Schieber-Führungselement | 120 | Trägerelement |
| 30 | y-Stellelement | 121 | Befestigungsmittel |
| 40 | x-Stellelement | 122 | Befestigungselement |
| 50 | y-Schieber | 123 | Schieber-Führungselement |
| 60 | x-Schieber | 130 | y-Stellelement |
| 70 | Hebelelement | 140 | x-Stellelement |
| 71 | Drehgelenk | 150 | y-Schieber |
| 80 | erste Führungseinheit | 151 | x-Linearführungselement |
| 81 | erster Führungszapfen | 152 | y-Linearführungselement |
| 82 | erste Führung | 160 | x-Schieber |
| 161 | y-Linearführungselement | 182 | erste Führung |
| 170 | Übertragungselement | 191 | zweiter Führungszapfen |
| 171 | Übertragungselementführung | 192 | zweite Führung |
| 181 | erster Führungszapfen | 200 | Dichtung selement |

## Patentansprüche

1. Kartesische Positioniervorrichtung zum Positionieren einer Optik für einen Laserbearbeitungskopf, umfassend:
eine Optikfassung (10, 110) zum Halten der Optik;
genau ein y-Stellelement (30, 130) für eine lineare Bewegung der Optikfassung (10, 110) in y-Richtung;
genau ein x-Stellelement (40, 140) für eine lineare Bewegung der Optikfassung (10, 110) in x-Richtung;
wobei das x-Stellelement (40, 140) und das y-Stellelement (30, 130) nebeneinander an einem Trägerelement (20, 120) angeordnet sind,
wobei das y-Stellelement (30, 130) entlang der y-Richtung verstellbar ist, um die Optikfassung (10, 110) entlang der y-Richtung linear zu verschieben, und
wobei das x-Stellelement (40, 140) entlang der y-Richtung verstellbar ist, um die Optikfassung (10, 110) entlang der x-Richtung linear zu verschieben,
wobei das y-Stellelement (30, 130) an einem Ende genau einen y-Schieber (50, 150) aufweist, der das y-Stellelement (30, 130) mit der Optikfassung (10, 110) verbindet,
wobei der y-Schieber (50, 150) mit der Optikfassung (10, 110) mittels einer Linearführungseinheit (15, 115) in x-Richtung beweglich verbunden ist.

2. Kartesische Positioniervorrichtung gemäß Anspruch 1, wobei einem Verstellwert des y-Stellelements (30, 130) oder des x-Stellelements (40, 140) jeweils ein bestimmter Wert für die lineare Bewegung in y-Richtung oder x-Richtung zugeordnet ist.

3. Kartesische Positioniervorrichtung gemäß Anspruch 1, wobei die Linearführungseinheit (15, 115) das y-Stellelement (30, 130) mit der Optikfassung (10, 110) invariant bezüglich einer Zug- oder Druckbelastung entlang der y-Achse verbindet.

4. Kartesische Positioniervorrichtung gemäß einem der vorausgehenden Ansprüche, wobei das x-Stellelement (40, 140) an einem Ende einen x-Schieber (60, 160) aufweist, der das x-Stellelement (40, 140) mit der Optikfassung (10, 110) verbindet.

5. Kartesische Positioniervorrichtung gemäß Anspruch 4, wobei der x-Schieber (60, 160) und/oder der y-Schieber (50, 150) entlang mindestens einem Schieber-Führungselement (23, 123) geführt ist.

6. Kartesische Positioniervorrichtung gemäß Anspruch 4 oder 5, wobei ein Übertragungselement (170) zwischen dem x-Schieber (130) und der Optikfassung (110) angeordnet ist, das in x-Richtung beweglich mit dem Trägerelement (120) verbunden ist.

7. Kartesische Positioniervorrichtung gemäß Anspruch 6, wobei das Übertragungselement (170) durch eine erste Führungseinheit (180) mit der Optikfassung (110) und durch eine zweite Führungseinheit (190) mit dem x-Schieber (130) beweglich verbunden ist.

8. Kartesische Positioniervorrichtung gemäß Anspruch 7, wobei die erste Führungseinheit (180) zum Führen der Optikfassung (110) in y-Richtung eingerichtet ist, und wobei die zweite Führungseinheit (190) zum Umwandeln einer Verstellbewegung des x-Stellelements (140) entlang der y-Richtung in eine Bewegung des Übertragungselements (70) entlang einer Richtung, die mit der y-Richtung einen Winkel kleiner 90° bildet, eingerichtet ist.

9. Kartesische Positioniervorrichtung gemäß einem der vorausgehenden Ansprüche 1 bis 4, wobei das x-Stellelement (40) mit der Optikfassung (10) über ein Hebelelement (70) beweglich verbunden ist, wobei das Hebelelement (70) in der x-y-Ebene schwenkbar mit dem Trägerelement (20) verbunden und L-förmig ausgebildet ist.

10. Kartesische Positioniervorrichtung gemäß Anspruch 9, wobei das Hebelelement (70) durch eine erste Führungseinheit (80) mit der Optikfassung (10) und durch eine zweite Führungseinheit (90) mit dem x-Stellelement (30) beweglich verbunden ist, wobei die erste Führungseinheit (80) einen ersten Führungszapfen (81) und eine erste Führung (82) zum Führen der Optikfassung (10) in y-Richtung umfasst, und wobei die zweite Führungseinheit (90) einen zweiten Führungszapfen (91) und eine zweite Führung (92) zum Übertragen einer Verstellbewegung des x-Stellelements (40) auf das Hebelelement (70) umfasst.

11. Kartesische Positioniervorrichtung gemäß Anspruch 10, wobei zumindest ein Teil der zweiten Führungseinheit (91, 92) auf einem Befestigungsfortsatz (11), der sich von der Optikfassung (10) in y-Richtung erstreckt, angeordnet ist.

12. Kartesische Positioniervorrichtung gemäß einem der vorausgehenden Ansprüche, wobei mindestens ein Federelement (18, 118) mit der Optikfassung (10, 110) und dem Trägerelement (20, 120) verbunden ist.

13. Laserbearbeitungskopf zum Bearbeiten eines Werkstücks mittels eines Laserstrahls, umfassend:
eine kartesische Positioniervorrichtung zum Positionieren einer Optik gemäß einem der vorausgehenden Ansprüche;
wobei die Optik in einem Strahlengang des Laserbearbeitungskopfes angeordnet ist.

14. Laserbearbeitungskopf nach Anspruch 13, wobei eine optische Achse des Laserbearbeitungskopfs in z-Richtung senkrecht zur x- und y-Richtung verläuft.

## Claims

1. Cartesian positioning device for positioning an optical system for a laser machining head, comprising:
an optical system mount (10, 110) for holding the optical system;
exactly one y-adjusting element (30, 130) for a linear movement of the optical system mount (10, 110) in the y-direction;
exactly one x-adjusting element (40, 140) for a linear movement of the optical system mount (10, 110) in the x-direction;
wherein the x-adjusting element (40, 140) and the y-adjusting element (30, 130) are arranged next to one another on a support element (20, 120),
wherein the y-adjusting element (30, 130) is adjustable in the y-direction in order to move the optical system mount (10, 110) linearly in the y-direction, and
wherein the x-adjusting element (40, 140) is adjustable in the y-direction in order to move the optical system mount (10, 110) linearly in the x-direction,
wherein the y-adjusting element (30, 130) has exactly one y-slide (50, 150) at one end, which connects the y-adjusting element (30, 130) to the optical system mount (10, 110),
wherein the y-slide (50, 150) is connected to the optical system mount (10, 110) by means of a linear guide unit (15, 115) so as to be movable in the x-direction.

2. Cartesian positioning device according to claim 1, wherein a specific value for the linear movement in the y-direction or x-direction is assigned to an adjustment value of the y-adjusting element (30, 130) or of the x-adjusting element (40, 140), respectively.

3. Cartesian positioning device according to claim 1, wherein the linear guide unit (15, 115) connects the y-adjusting element (30, 130) to the optical system mount (10, 110) invariantly with respect to a tensile or compressive load along the y-axis.

4. Cartesian positioning device according to any of the preceding claims, wherein the x-adjusting element (40, 140) has an x-slide (60, 160) at one end, which connects the x-adjusting element (40, 140) to the optical system mount (10, 110).

5. Cartesian positioning device according to claim 4, wherein the x-slide (60, 160) and/or the y-slide (50, 150) is guided along at least one slide guide element (23, 123).

6. Cartesian positioning device according to claim 4 or 5, wherein a transmission element (170) is arranged between the x-slide (130) and the optical system mount (110), which transmission element is connected to the support element (120) so as to be movable in the x-direction.

7. Cartesian positioning device according to claim 6, wherein the transmission element (170) is movably connected to the optical system mount (110) by a first guide unit (180) and is movably connected to the x-slide (130) by a second guide unit (190).

8. Cartesian positioning device according to claim 7, wherein the first guide unit (180) is designed to guide the optical system mount (110) in the y-direction, and wherein the second guide unit (190) is designed to convert an adjusting movement of the x-adjusting element (140) in the y-direction into a movement of the transmission element (70) in a direction which forms an angle of less than 90° with the y-direction.

9. Cartesian positioning device according to any of preceding claims 1 to 4, wherein the x-adjusting element (40) is movably connected to the optical system mount (10) by a lever element (70), wherein the lever element (70) is connected to the support element (20) so as to be pivotable in the x-y-plane and is L-shaped.

10. Cartesian positioning device according to claim 9, wherein the lever element (70) is movably connected to the optical system mount (10) by a first guide unit (80) and is movably connected to the x-adjusting element (30) by a second guide unit (90), wherein the first guide unit (80) comprises a first guide pin (81) and a first guide (82) for guiding the optical system mount (10) in the y-direction, and wherein the second guide unit (90) comprises a second guide pin (91) and a second guide (92) for transmitting an adjusting movement of the x-adjusting element (40) to the lever element (70).

11. Cartesian positioning device according to claim 10, wherein at least part of the second guide unit (91, 92) is arranged on a fastening extension (11) which extends from the optical system mount (10) in the y-direction.

12. Cartesian positioning device according to any of the preceding claims, wherein at least one spring element (18, 118) is connected to the optical system mount (10, 110) and the support element (20, 120).

13. Laser machining head for machining a workpiece by means of a laser beam, comprising:
a Cartesian positioning device for positioning an optical system according to any of the preceding claims;
wherein the optical system is arranged in a beam path of the laser machining head.

14. Laser machining head according to claim 13, wherein an optical axis of the laser machining head extends in the z-direction, perpendicularly to the x-direction and y-direction.

## Revendications

1. Dispositif de positionnement cartésien destiné à positionner une optique pour une tête d'usinage au laser, comportant :
une monture optique (10, 110) pour maintenir l'optique ;
exactement un élément d'actionnement y (30, 130) pour un mouvement linéaire de la monture optique (10, 110) dans une direction y ;
exactement un élément d'actionnement x (40, 140) pour un mouvement linéaire de la monture optique (10, 100) dans une direction x ;
dans lequel l'élément d'actionnement x (40, 140) et l'élément d'actionnement y (30, 130) sont agencés l'un à côté de l'autre sur un élément de support (20, 120),
dans lequel l'élément d'actionnement y (30, 130) est réglable le long de la direction y afin de déplacer linéairement la monture optique (10, 110) le long de la direction y, et
dans lequel l'élément d'actionnement x (40, 140) est réglable le long de la direction y afin de déplacer linéairement la monture optique (10, 110) le long de la direction x,
dans lequel l'élément d'actionnement y (30, 130) comporte, à une extrémité, exactement un coulisseau y (50, 150) qui relie l'élément d'actionnement y (30, 130) à la monture optique (10, 110),
dans lequel le coulisseau y (50, 150) est relié à la monture optique (10, 110) de manière mobile dans la direction x au moyen d'une unité de guidage linéaire (15, 115).

2. Dispositif de positionnement cartésien selon la revendication 1, dans lequel une valeur définie pour le mouvement linéaire dans la direction y ou dans la direction x est respectivement associée à une valeur de réglage de l'élément d'actionnement y (30, 130) ou de l'élément d'actionnement x (40, 140).

3. Dispositif de positionnement cartésien selon la revendication 1, dans lequel l'unité de guidage linéaire (15, 115) relie l'élément d'actionnement y (30, 130) à la monture optique (10, 110) de manière invariante par rapport à une charge de traction ou de compression le long de l'axe y.

4. Dispositif de positionnement cartésien selon l'une des revendications précédentes, dans lequel l'élément d'actionnement x (40, 140) comporte, à une extrémité, un coulisseau x (60, 160) qui relie l'élément d'actionnement x (40, 140) à la monture optique (10, 110).

5. Dispositif de positionnement cartésien selon la revendication 4, dans lequel le coulisseau x (60, 160) et/ou le coulisseau y (50, 150) est guidé le long d'au moins un élément de guidage de coulisseau (23, 123).

6. Dispositif de positionnement cartésien selon la revendication 4 ou 5, dans lequel un élément de transmission (170) est agencé entre le coulisseau x (130) et la monture optique (110), lequel élément de transmission étant relié à l'élément de support (120) de manière mobile dans la direction x.

7. Dispositif de positionnement cartésien selon la revendication 6, dans lequel l'élément de transmission (170) est relié de manière mobile à la monture optique (110) par l'intermédiaire d'une première unité de guidage (180) et au coulisseau x (130) par l'intermédiaire d'une seconde unité de guidage (190).

8. Dispositif de positionnement cartésien selon la revendication 7, dans lequel la première unité de guidage (180) est conçue pour guider la monture optique (110) dans la direction y, et dans lequel la seconde unité de guidage (190) est conçue pour convertir un mouvement de réglage de l'élément d'actionnement x (140) le long de la direction y, en un mouvement de l'élément de transmission (170) le long d'une direction qui forme un angle avec la direction y inférieur à 90°.

9. Dispositif de positionnement cartésien selon l'une des revendications 1 à 4 précédentes, dans lequel l'élément d'actionnement x (40) est relié de manière mobile à la monture optique (10) par l'intermédiaire d'un élément de levier (70), dans lequel l'élément de levier (70) est relié à l'élément de support (20) de manière à pouvoir pivoter dans le plan x-y et est réalisé en forme de L.

10. Dispositif de positionnement cartésien selon la revendication 9, dans lequel l'élément de levier (70) est relié de manière mobile à la monture optique (10) par l'intermédiaire d'une première unité de guidage (80) et à l'élément d'actionnement x (30) par l'intermédiaire d'une seconde unité de guidage (90), dans lequel la première unité de guidage (80) inclut un premier axe de guidage (81) et un premier guide (82) pour guider la monture optique (10) dans la direction y, et dans lequel la seconde unité de guidage (90) inclut un second axe de guidage (91) et un second guide (92) pour transmettre un mouvement de réglage de l'élément d'actionnement x (40) à l'élément de levier (70).

11. Dispositif de positionnement cartésien selon la revendication 10, dans lequel au moins une partie de la seconde unité de guidage (91, 92) est agencée sur une extension de fixation (11) qui s'étend à partir de la monture optique (10) dans la direction y,

12. Dispositif de positionnement cartésien selon l'une des revendications précédentes, dans lequel au moins un élément à ressort (18, 118) est relié à la monture optique (10, 110) et à l'élément de support (20, 120).

13. Tête d'usinage au laser pour usiner une pièce au moyen d'un faisceau laser, incluant :
un dispositif de positionnement cartésien pour positionner une optique selon l'une des revendications précédentes ;
dans laquelle l'optique est agencée dans un trajet de faisceau de la tête d'usinage au laser.

14. Tête d'usinage au laser selon la revendication 13, dans laquelle un axe optique de la tête d'usinage laser s'étend dans une direction z orthogonale aux directions x et y.
